# EUROPEAN PATENT APPLICATION

(11) **EP 0 756 039 A1**
(43) Date of publication of application: **29.01.1997**
(21) Application number: 96401683.6
(22) Date of filing: 26.07.1996
(51) Int. Cl.: E03C 1/04

(54) **Faucet connector assembly**

(30) Priority: 27.07.1995 US 508058
(71) Applicant: LSP Products Group, Inc., Carson City, NV 89706 (US)
(72) Inventor: Hobbs, Billy J., Jr., Gardnerville, Nevada 89401 (US)
(74) Representative: Pochart, François

(57) **Abstract**

A faucet connector assembly is disclosed that is useful for connecting a sink or lavatory faucet to a hot or cold water supply line, the assembly having a flexible hose (24) with a length sufficient to reach between the faucet and the supply line, and a connector fitting (14) attached to the hose and nearer the faucet that has a tubular body (15) with a sealing surface (34) adapted to engage a seating member (36) inside a faucet valve inlet port (16) and an externally threaded section (30) adapted to threadedly engage the open end of the faucet valve inlet port (16).

## Description

### BACKGROUND OF THE INVENTION

### 1. Field of the Invention

This invention relates to faucet connect or assemblies, and more particularly, to externally threaded fittings suitable for use in connecting a flexible connector hose to an internally threaded hot or cold water inlet line of a sink or lavatory faucet.

### 2. Description of Related Art

The use of flexible hose assemblies for connecting water supply lines to sink or lavatory faucets is well known. Such hose assemblies frequently comprise a polymeric tubular core surrounded by a braided metal sheath, with metal connector fittings inserted into each hose end and crimped in place. One end fitting is typically attached to an exernally threaded water supply line or shut-off valve outlet line, and the opposite end fitting is typically attached to an externally threaded fitting attached to a faucet inlet line. The end fittings of conventional connector hose assemblies usually each have a tubular section surrounded by an internally threaded, rotatable nut at the open end, and further comprise some means for providing sealing engagement between the tubular section and an externally threaded conduit onto which the rotatable nut is threaded to make the desired connection. Various means have previously been disclosed for providing sealing engagement between liquid flow lines and between faucet inlet lines and conventional connector hose assemblies. Such means are disclosed, for example, in United States Patent Nos. 3,338,597; 3,831,983; 4,159,027; 4,589,688; 4,679,828; 4,691,726; 5,026,419; and 5,364,135.

In the past, faucet inlet lines have most often been constructed by welding or brazing metal tubing, usually copper tubing, to a valve disposed inside the faucet base. The tubing generally extends downward from the faucet to facilitate attachment of the connector hose after the faucet is installed on a sink or lavatory. Because the faucet inlet lines are often bent during packing, unpacking or installation, small fissures or cracks may occur in the tubing wall that cause water leakage when the tubing is pressurized during use. Such leakage has previously required replacement of the entire faucet assembly because the metal tubing is permanently attached to the faucet base. In other instances, twisting of the metal tubing during installation causes leaks to occur at the point of attachment to the faucet base. While the more recent use of corrugated copper tubing for the faucet supply lines has reduced the frequency of such leaks to some extent, the need remains for an attachment means that can be more efficiently, inexpensively and conveniently used.

### SUMMARY OF THE INVENTION

According to one embodiment of the invention, a faucet connector assembly is provided that comprises at least one faucet valve inlet line having an internally threaded free end and a seating shoulder or seating surface disposed axially inward from the threaded free end, and a flexible hose segment having inserted into one end thereof a first fitting releasably attachable to a hot or cold water supply line and having inserted into the other end thereof a second fitting releasably attachable to the faucet valve inlet port, the hose segment having a length sufficient to reach between the faucet valve inlet port and the supply line. Alternatively, the first fitting can be permanently attached to an in-line valve. The second fitting preferably further comprises a tubular body having at one end a tapered sealing surface and at the other end at least one hose barb having a diameter sufficient to frictionally engage the inside wall of the hose when inserted into the hose end, an externally threated section disposed between the tapered sealing surface and the hose barb that is adapted to threadedly engage the open end of the faucet valve inlet port so as to facilitate sealing engagement between the tapered sealing surface of the second fitting and the seating shoulder or seating surface of the faucet valve inlet port, and a hexagonal section disposed between the externally threaded section and the hose barb to facilitate the use of a wrench in tightening the second fitting inside the faucet valve inlet port. The hexagonal section preferabaly has a diameter greater than the inside diameter of the hose section and preferably about the same as or slightly greater or smaller than the outside diameter of the hose section. The second fitting preferably has a section disposed between the hexagonal section and the hose barb with an outside diameter less than the outside diameter of the hexagonal section or the hose barb to facilitate crimping of the hose end around the reduced diameter section of the tubular body. According to another embodiment of the invention, a faucet and hose connector fitting is provided that comprises a tubular body having at one end a tapered sealing surface and at the other end at least one hose barb or step having a diameter sufficient to frictionally engage the inside wall of the hose when inserted into the hose end, and externally threaded section disposed between the tapered sealing surface and the hose barb that is adapted to threadedly engage the open end of the faucet valve inlet port so as to facilitate sealing engagement between the tapered sealing surface of the second fitting and a cooperating seating shoulder or seating surface inside the faucet valve inlet port, a hexagonal section disposed between the externally threaded section and the hose barb to facilitate the use of a wrench in tightening the second fitting inside the faucet valve inlet port, the hexagonal section having a diameter greater than the inside diameter of the hose section and preferably about the same as or slightly greater or smaller than the outside diameter of the hose section, and a section disposed between the hexagonal section and the hose barb having a reduced diameter section with an outside diameter less than the outside diameter of the hexagonal section or the hose barb to facilitate crimping of the hose end around the reduced diameter section of the tubular body. According to another preferred embodiment of the invention, the tapered sealing surface of the subject faucet and hose connector fitting is disposed on an annular polymeric insert that frictionally engages the distal end portion of the fitting.

### BRIEF DESCRIPTION OF THE DRAWINGS

The apparatus of the invention is further described and explained in relation to the following figures of the drawings wherein:
FIG. 1 depicts a lavatory faucet installation utilizing the faucet connector assembly of the invention;
FIG. 2 is a detail elevation view, partially broken away and partially in section, of a flexible hose segment having crimped to one end thereof a faucet and hose connector fitting that is threaded into the open end of a faucet valve inlet port;
FIG. 3 is a perspective view of the faucet and hose connector fitting of the invention;
FIG. 4 is an enlarged plan view of the faucet and hose connector fitting of FIG. 3;
FIG. 5 is a cross-sectional elevation view of the faucet and hose connector fitting of the invention taken along line 5--5 of FIG. 4; and
FIG. 6 is a cross-sectional elevation view, partially broken away, of an alternate embodiment of the threaded end of a faucet and hose connector fitting having an annular insert with a tapered sealing surface.

Like reference numerals are used to indicate like parts in all figures of the drawings.

### DESCRIPTION OF THE PREFERRED EMBODIMENTS

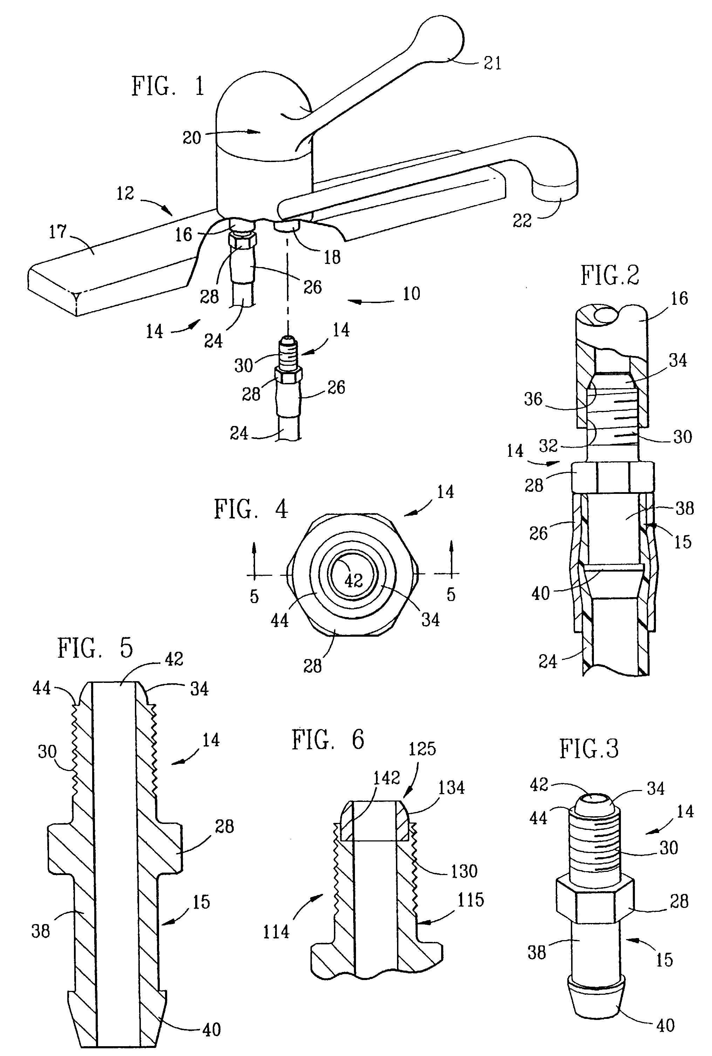

Referring to FIG. 1, faucet connector assembly 10 is shown as it could be utilized in a preferred installation with a single-lever faucet assembly 12. As shown in FIG. 1, faucet assembly 12 includes base 17 such as might be mounted on a lavatory, cabinet or other underlying support surface, internally threaded valve inlet ports 16, 18 for hot and cold water, dispensing spout 22 and mixing valve assembly 20 controlled by handle 21 for regulating liquid flow between valve inlet ports 16, 18 and dispensing spout 22. Although the structure and operation of faucet connector assembly 10 of the invention are described herein in relation to use with a sink or lavatory faucet, it will be appreciated by those of ordinary skill in the art upon reading this disclosure that faucet connector assembly 10 of the invention is similarly useful for connecting flexible hoses to other equipment and devices and for conducting fluids other than water such as, for example, fuel oil, hydraulic fluid, pressurized air, and the like.

Referring to FIGS. 1 and 2, each faucet connector assembly 10 preferably further comprises one faucet and hose connector fitting 14, attachable to faucet inlet port 16 or 18, and hose segment 24. Where the faucet assembly 12 has both hot and cold water inlet ports, a faucet connector assembly 10 is desirably provided for each port. Faucet and hose connector fitting 14 is inserted into one end of hose segment 24 and is held in place by ferrule 26 that is crimped around the end of hose segment 24 behind hexagonal section 28. Faucet inlet port 16 preferably comprises an internally threaded open end section 32 and a seating member 36 that is cooperatively aligned with sealing surface 34 of faucet and hose connector fitting 14 whenever externally threaded section 30 of faucet and hose connector 14 is threaded into engagement with internally threaded section 32 of valve inlet port 16. Valve inlet port 16 is preferably made of brass or another corrosion-resistant material that is on the inlet side of mixing valve assembly 20 so as to provide fluid communication between fluid inlet port 16 and dispensing spout 22 whenever mixing valve assembly 20 is in the open position with respect to faucet valve inlet port 16. Faucet valve inlet port 16 will normally be supplied by the faucet manufacturer as an integral part of faucet assembly 12. Faucet and hose connector fitting 14 will desirably be available in a variety of diameters and thread configurations so as to facilitate connection to any faucet valve inlet port 16.

Although hose segment 24 is depicted in FIG. 2 as being a single-layer construction for illustrative purposes, it should be understood that any conventional, commercially available hose segment can likewise be used within the scope of the invention. Thus, for exemple, multiple layer hoses having thermoplastic cores surrounded by braided or woven sheaths of metal wire, synthetic fibers, other metallic or polymeric materials, and the like, can likewise be used with faucet and hose connector fitting 14 in faucet connector assembly 10 of the invention. As shown in FIG. 2, hose barb 40 extending radially outward from reduced diameter section 38 behind hexagonal section 28 of faucet and hose connector fitting 14 has been inserted into the open end of hose segment 24 and crimped in place by ferrule 26. Although only one hose barb 40 is depicted in FIG. 2, it will be appreciated that a plurality of hose barbs 40 and reduced diameter sections 38 can be alternated along tubular body 15 of faucet and hose connector fitting 14 behind hexagonal section 28.

As used herein, "hexagonal section" 28 actually refers to a portion of faucet and hose connector fitting 14 having an externally engageable section adapted to be grasped manually or engaged with a wrench and rotated to thread connector fitting 14 into an inlet port. According to one particularly prefered embodiment of the invention, "hexagonal section" 28 comprises a plurality of symmetrically arranged, flat surfaces having dimensions such that they circumscribe a circle having a diameter that is preferably about equal to or slightly greater or smaller than the diameter of hose segment 24. Depending upon the diameter of the fitting utilized, "hexagonal section" 28 can have an outside shape that is hexagonal or octagonal, knurled, or any combination thereof, all within the scope of the invention. The lengh of hexagonal section 28 in the axial direction is desirably long enough that the flat outside surfaces will conveniently accommodate a conventional wrench such as might be used to tighten faucet and hose connector fitting 14 inside faucet valve inlet 16.

The structure of faucet and hose connector fitting 14 is further described and explained in relation to FIGS. 3-5 which show tubular body 15 comprising a centrally disposed tubular bore 42 surrounded by sealing surface 34 and exernally threaded section 30 separating by annular shoulder 44, hose barb 40 disposed near the end of tubular body 15 opposite sealing surface 34, hexagonal section 28 disposed between threaded section 30 and hose barb 40, and reduced diameter section 38 disposed between hexagonal section 28 and hose barb 40. Faucet and hose connector fitting 14 is preferably a unitary construction made of metal or a suitable plastic, ceramic or composite material. A particularly preferred material for use in making faucet and hose connector fitting 14 is ASTM B-16 brass, and most preferably, nickel-plated brass. Sealing surface 34 is preferably a tapered surface that can have a convex arcuate cross section as shown in FIG. 4, a linear frustoconical cross section, or another similarly effective structure provided that sealing surface 34 and seating surface 36 of faucet valve inlet port 16 as shown in FIG. 2 are cooperatively spaced and aligned so as to provide sealing engagement therebetween whenever faucet and hose connector fitting 14 is fully seated within the internally threaded 32 of faucet valve inlet port 16. The use of a tapered convex sealing surface 34 is believed to provide greater sealing reliability in faucet and hose connector fittings 14 that are provided for use with faucet assemblies 12 made by a variety of manufacturers.

FIG. 6 depicts an alternate embodiment of the threaded end of a faucet and hose connector fitting 114 having an annular insert 125 with a tapered sealing surface 134 and a tubular bore 142. As shown in FIG. 6, annular insert 125 is seated in annular counterbore 135 so that sealing surface 134 extends beyond externally threaded section 130. Alternatively, tubular body 115 can be made with a relatively thinner-walled tubular tip extending beyond threaded section 130 that is slidably engaged by the tubular bore of annular insert 125. Annular insert 125 is preferably made of a polymeric material, but can also be made of another suitable metal, ceramic or composite material.

Although tubular bore 42 is depicted in FIG. 5 as having a constant diameter, it will be appreciated that faucet and hose connector fittings having a stepped internal bore likewise fall within the scope of the invention. It will also be appreciated that while the use of a crimped ferrule 26 is disclosed herein for attaching faucet and hose connector fitting 14 to the end of hose segment 24, other conventional, commercially available means such as screw-type hose clamps can likewise be used within the scope of the invention.

Other alterations and modifications of the invention will likewise become apparent to those of ordinary skill in the art upon reading the present disclosure, and it is intended that the scope of the invention disclosed herein be limited only by the broadest interpretation of the appended claims to which the inventor is legally entitled.

## Claims

1. A faucet connector assembly (10) comprising:
a flexible hose segment (24) with an inside wall having an inside diameter sufficient to accommodate a desired fluid flow; and
a faucet and hose connector fitting (14) partially inserted into one end of the hose segment (24), the fitting comprising:
a tubular body (15) having an inside diameter sufficient to accomodate the desired fluid flow,
the tubular body (15) having at one end an outwardly facing tapered sealing surface (34) and having near the other end at least one hose barb (40) with an outside diameter sufficient to frictionally engage the inside wall of the hose segment (24) when inserted into the end of the hose segment,
the tubular body (15) further having an externally threaded section (30) disposed between the tapered sealing surface (34) and the hose barb (40) for threadable engagement with an internally threaded open end (32) of a faucet valve inlet port (16) to establish sealing engagement between the tapered sealing surface (34) of the faucet and hose connector fitting and a cooperating seating shoulder or seating surface (36) inside the faucet valve inlet port (16),
the tubular body (15) further having an externally engageable section (28) disposed between the externally threaded section (30) and the hose barb (40) with an outside diameter greater than the inside diameter of the hose segment (24), and having another continuously unthreaded section (38) disposed between the externally engageable section and the hose barb (40) with a reduced outside diameter that is less than the outside diameter of the externally engageable section and less than the outside diameter of the hose barb (40).

2. The faucet connector assembly of claim 1 wherein the tapered sealing surface (34) of the faucet and hose connector fitting has the shape of a truncated cone.

3. The faucet connector assembly of claim 1 wherein the tapered sealing surface (34) of the faucet and hose connector fitting is a convex arcuate surface.

4. The faucet connector assembly of claims 1 to 3 wherein the faucet and hose connector fitting (14) is a unitary fitting made of metal.

5. The faucet connector assembly of claims 1 to 4 wherein the faucet and hose connector fitting (14) is a unitary fitting made of brass.

6. The faucet connector assembly of claims 1 to 5 wherein the faucet and hose connector fitting (14) is nickel plated.

7. The faucet connector assembly of claims 1 to 3 wherein the faucet and hose connector fitting (14) is made of a material selected from the group consisting of metal, plastic, ceramic, or a composite thereof.

8. The faucet connector assembly of claims 1 to 7, further comprising a ferrule (26) crimped onto the hose end around the reduced diameter section of the faucet and hose connector fitting (14).

9. The faucet connector assembly of claims 1 to 8 wherein the tapered sealing surface (134) of the faucet and hose connector fitting (114) is disposed on an annular insert (125) that is seated on the end of the tubular body (115).

10. The faucet connector assembly of claim 9 wherein the annular insert (125) is made of a material selected from the group consisting of metal, plastic, ceramic, or a composite thereof.

11. The faucet connector assembly of claim 9 or 10 wherein the insert (125) is made of a polymeric material.

12. The faucet connector assembly of claim 11 wherein the polymeric material comprises an elastomer.

13. A faucet and hose connector fitting comprising:
a tubular body having an inside diameter sufficient to accommodate a desired fluid flow,
the tubular body (15) having at one end an outwardly facing tapered sealing surface (34) and having near the other end at least one hose barb (40) with an outside diameter sufficient to frictionally engage a hose segment (24) when inserted into an end of the hose segment,
the tubular body (15) further having an externally threaded section (30) disposed between the tapered sealing surface (34) and the hose barb (40), an externally engageable section (28) disposed between the externally threaded section (30) and the hose barb (40), and a continuously unthreaded reduced diameter section (38) disposed between the externally engageable section (28) and the hose barb (40).

14. The faucet and hose connector fitting of claim 13 wherein the tapered sealing surface (34) has the shape of a truncated cone.

15. The faucet and hose connector fitting of claim 13 wherein the tapered sealing surface (34) is a convex arcuate surface.

16. The faucet and hose connector fitting of claims 13 to 15 wherein the fitting (14) is made of a material selected from the group consisting of metal, plastic, ceramic, or a composite thereof.

17. The faucet and hose connector fitting of claims 13 to 16 wherein the fitting (14) is a unitary fitting made of brass.

18. The faucet and hose connector fitting of claim 17 wherein the brass is nickel plated.

19. The faucet and hose connector fitting of claims 13 to 16 wherein the fitting (14) is made of molded plastic.

20. The faucet and hose connector fitting of claims 13 to 19 wherein the tapered sealing surface (34) of the faucet and hose connector fitting (14) is disposed on an annular insert (125) that is seated on the end of the tubular body (115).

21. The faucet and hose connector fitting of claim 20 wherein the annular insert (125) is made of a material selected from the group consisting of metal, plastic, ceramic, or a composite thereof.

22. The faucet and hose connector fitting of claim 20 wherein the annular insert (125) is made of a polymeric material.

23. The faucet and hose connector fitting of claim 22 wherein the polymeric material comprises an elastomer.
